# EUROPÄISCHE PATENTSCHRIFT

(11) **EP 4 098 554 B1**
(45) Veröffentlichungstag und Bekanntmachung des Hinweises auf die Patenterteilung: **25.10.2023**
(21) Anmeldenummer: 21176917.9
(22) Anmeldetag: 31.05.2021
(51) Int. Cl.: B64C 1/14, F16B 2/14, E05B 83/00

(54) **TORVERRIEGELUNGSVORRICHTUNG UND FLUGZEUG MIT TORVERRIEGELUNGSVORRICHTUNG**
DOOR LOCKING DEVICE AND AIRCRAFT WITH DOOR LOCKING DEVICE
DISPOSITIF DE VERROUILLAGE DE PORTE ET AÉRONEF POURVU DE DISPOSITIF DE VERROUILLAGE DE PORTE

(43) Veröffentlichungstag der Anmeldung: 07.12.2022
(73) Patentinhaber: Airbus Operations GmbH, 21129 Hamburg (DE)
(72) Erfinder: OHLE, Sören, 21129 Hamburg (DE)
(74) Vertreter: Isarpatent

(56) Entgegenhaltungen:
- DE-A1-102019 207 125
- KR-A- 20170 096 439
- US-A- 3 638 983

## Beschreibung

### TECHNISCHES GEBIET DER ERFINDUNG

Die Erfindung betrifft eine Torverriegelungsvorrichtung, welche beispielsweise im Luft- und Raumfahrtbereich oder im Automobilbau eingesetzt werden kann, insbesondere zur Verriegelung von Schwenkschiebetüren oder Drehschwenktüren in Flugzeugen.

### TECHNISCHER HINTERGRUND

Schwenkschiebetüren oder Drehschwenktüren, sogenannte "plug-type doors", sind Türsysteme, die so konstruiert sind, dass sie bei Druckunterschieden zwischen Außenraum und Innenraum eine durch das Aufbauprinzip bedingte Selbstabdichtung aufweisen. Derartige Türen werden häufig Flugzeugen eingesetzt, bei denen während des Fluges im Innenraum ein Überdruck aufgebaut bzw. aufrechterhalten wird. Das Dokument US 4,497,462 A beispielsweise zeigt eine derartige Drehschwenktür als Frachtraumtor für den Frachtraum eines Flugzeugs.

Gerade bei größeren Flugzeugtüren oder -toren, wie etwa Frachtraumtoren, wirken während des Fluges hohe Zugkräfte. Zudem können hohe Lastunterschiede, beispielsweise im Vergleich zwischen unbeladenem und beladenem Frachtraum, dazu führen, dass im Bereich der Torspalte Verformungen oder Durchbiegungen auftreten, die die korrekte Ausrichtung der Torverriegelungselemente zueinander beeinträchtigen können.

Die Druckschrift DE 10 2014 005 234 A1 offenbart eine Klemmvorrichtung zum Halten von Rohren oder Stangen.

Die Druckschrift US 3,638,983 A offenbart einen Verriegelungsmechanismus und ein Betätigungsmittel dafür.

Die Druckschrift DE 10 2019 207125 A1 offenbart ein Verriegelungssystem mit einer doppelt exzentrischen Bolzenanordnung für eine Fahrzeugtür.

Die Druckschrift KR 2017 0096439 A offenbart einen Türverriegelungsbügel für ein Flugzeug.

### ZUSAMMENFASSUNG DER ERFINDUNG

Eine der Aufgaben der Erfindung besteht darin, Lösungen für Torverriegelungssysteme zu finden, die das Tor beim Verschließen selbst zentrieren. Weiterhin besteht eine der Aufgaben der Erfindung darin, Lösungen für Torverriegelungssysteme zu finden, die auf kleinem Bauraum sehr große Zugkräfte in den Rahmenbereich des Tors ableiten können.

Diese und andere Aufgaben werden durch eine Torverriegelungsvorrichtung mit den Merkmalen des Anspruchs 1 sowie ein Flugzeugtor mit den Merkmalen des Anspruchs 9 gelöst.

Gemäß einem ersten Aspekt der Erfindung umfasst eine Torverriegelungsvorrichtung für ein Flugzeugtor eine Exzenterbuchse, welche mit einem Torspant des Flugzeugtorblatts verbindbar ist, ein in der Exzenterbuchse eingebrachtes Innenfutter, welches eine mittig entlang einer Bolzenaufnahmeachse ausgerichtete Bolzenaufnahme zur Aufnahme eines Verriegelungsbolzens aufweist, eine in dem Innenfutter angeordnete Presskegelhülse, eine Klemmkegelhülse, deren Außenkegelmantelfläche mit einer Innenkegelmantelfläche der Presskegelhülse in verschiebbarem Eingriff steht, und deren Innenzylindermantelfläche mit der Außenwand der Bolzenaufnahme fluchtet, und auf jeweils zwei entgegengesetzten Seiten der Presskegelhülse in dem Innenfutter montierte Linearaktuatoren, welche dazu ausgelegt sind, die Presskegelhülse entlang der Bolzenaufnahmeachse gegenüber der Klemmkegelhülse zu verschieben.

Gemäß einem zweiten Aspekt der Erfindung umfasst ein Flugzeugtor ein Torblatt mit Torspanten und Torhautelementen, eine in dem Torblatt montierte Torverriegelungsvorrichtung gemäß dem ersten Aspekt der Erfindung, einen Torrahmenbereich mit einem über einen 2-Wege-Linearaktuator angetriebenen Verriegelungsbolzen, welcher entlang der Bolzenaufnahmeachse in einer Rahmenbolzenaufnahme geführt wird, eine Rahmenexzenterbuchse, welche mit einem Torrahmenspant verbunden ist, und ein in der Rahmenexzenterbuchse eingebrachtes Rahmeninnenfutter, in welchem eine Innenkegelmantelfläche einer Rahmenpresskegelhülse mit einer Außenkegelmantelfläche einer Rahmenklemmkegelhülse in verschiebbarem Eingriff steht, und in welchem auf jeweils zwei entgegengesetzten Seiten der Rahmenpresskegelhülse angebrachte Rahmenlinearaktuatoren dazu ausgelegt sind, die Rahmenpresskegelhülse entlang der Bolzenaufnahmeachse gegenüber der Rahmenklemmkegelhülse zum Einklemmen bzw. Freigeben des Verriegelungsbolzens zu verschieben.

Gemäß einem dritten Aspekt der Erfindung umfasst ein Flugzeug ein Flugzeugtor gemäß dem zweiten Aspekt der Erfindung. Das Flugzeugtor kann in einigen Ausführungsformen ein insbesondere als Drehschwenktor ausgebildetes Frachtraumtor sein.

Eine wesentliche Idee der Erfindung besteht darin, einen Bolzenverschluss für ein Flugzeugtor zu schaffen, welcher Kräfte und Momente in allen Richtungen übertragen kann. Insbesondere hohe Zuglasten können aufgrund der aktiv aktuierten Klemmung auf kleinem Bauraum effektiv in die Spantstruktur des Flugzeugs abgeleitet werden. Bei einer Montage in einem typischen Flugzeugtorrahmen induzieren Bolzenzugkräfte insbesondere Torsionsmomente in den C-Spanten, so dass die Klemmkraft gesteigert werden kann.

Vorteilhafterweise können Fertigungstoleranzen des Torblatts und/oder des Torrahmens in allen Richtungen translatorisch ausgeglichen werden - die Torverriegelungs-vorrichtung ermöglicht beim Schließen eine Selbstzentrierung des Tores sowie eine Selbstzentrierung des Verriegelungsbolzens beim Verriegeln. Ein besonderer Vorteil ergibt sich zudem durch den aktiv aktuierten, insbesondere hydraulischen Bolzenantrieb, der die Zuverlässigkeit der Verriegelung und Entriegelung erhöht.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen der erfindungsgemäßen Torverriegelungsvorrichtung können die Linearaktuatoren Hydraulikzylinder sein, welche beispielsweise mit Öldruck beaufschlagbar sind.

Gemäß einiger Ausführungsformen der erfindungsgemäßen Torverriegelungsvorrichtung kann die Presskegelhülse über eine Passfeder gegenüber Rotation um die Bolzenaufnahmeachse in dem Innenfutter gesichert werden.

Gemäß einiger weiterer Ausführungsformen der erfindungsgemäßen Torverriegelungsvorrichtung können die Presskegelhülse und/oder die Klemmkegelhülse ein- oder mehrfach, und teilweise oder über die gesamte Länge des jeweiligen Kegelhülsenkörpers, geschlitzt sein. Die Klemmkegelhülse kann in manchen Ausführungsvarianten durch Verzahnung ihres Schlitzes oder einer Nut eines Segmentes gegenüber Rotation um die Bolzenaufnahmeachse über eine Nase des Innenfutters gesichert werden. Alternativ dazu kann es in manchen Ausführungsvarianten auch möglich sein, die Klemmkegelhülse mit einer Hülsennase oder einer Nase an einem ihrer Segmente zu versehen, die dann in einer korrespondierenden Nut im Innenfutter gesichert werden kann. Beider dieser Varianten ermöglichen die Ausübung eines gleichmäßigen Anpressdrucks auf den Verriegelungsbolzen um die gesamte Bolzenmantelfläche herum.

Gemäß einiger weiterer Ausführungsformen der erfindungsgemäßen Torverriegelungsvorrichtung kann das Innenfutter rahmenseitig ballig ausgeführt werden. Dies ermöglicht in vorteilhafter Weise eine Zentrierung des Tores beim Schließen im Rahmen. Das Innenfutter kann in manchen Ausführungsformen an der Öffnung der Bolzenaufnahme eine Bolzenführungsfase aufweisen. Dadurch kann gewährleistet werden, dass der Verriegelungsbolzen beim Verriegeln in der torseitigen Klemmvorrichtung zentriert wird, um betriebslastbedingte Abweichungen ausgleichen zu können.

Gemäß einiger weiterer Ausführungsformen der erfindungsgemäßen Torverriegelungsvorrichtung kann die Torverriegelungsvorrichtung weiterhin ein Kraftableitungsrohr umfassen, welches über eine Rohrhülse mit einem torseitig montierten Verbindungsrohr verschraubt ist. Das Kraftableitungsrohr kann beispielsweise als Verlängerungsstück des Innenfutters ausgebildet werden. Mit dieser Konfiguration können auf verschiedenen Seiten des Tores gegenüberliegende, jeweils aus Presskegelhülse und Klemmkegelhülse bestehende Klemmvorrichtungen durch den Torblattkörper hindurch verbunden werden, so dass eine Übertragung von Zug- und Druckkräften ohne Belastung des Tores möglich wird.

Gemäß einiger weiterer Ausführungsformen der erfindungsgemäßen Torverriegelungsvorrichtung kann sich die Klemmkegelhülse entlang der Bolzenaufnahmeachse zur Öffnung der Bolzenaufnahme hin verjüngen. Besonders vorteilhaft kann es dabei sein, wenn die Außenkegelmantelfläche der Klemmkegelhülse und die Innenkegelmantelfläche der Presskegelhülse mit einer die Haftreibung zwischen der Klemmkegelhülse und der Presskegelhülse vermindernden Beschichtung wie beispielsweise Teflon versehen sind. Insbesondere wenn die Reibung zwischen den Kegelhülsen geringer als die Reibung zwischen Verrieglungsbolzen und Klemmkegelhülse sowie zwischen Presskegelhülse und Innenfutter ist, kann eine Selbsthemmung des Verriegelungsbolzens in der Bolzenaufnahme in geklemmtem Zustand erzielt werden.

Gemäß einiger Ausführungsformen des erfindungsgemäßen Flugzeugtors kann der 2-Wege-Linearaktuator ein Hydraulikzylinder sein, welcher über eine Distanzhülse in Richtung der Bolzenaufnahmeachse in den Rahmenbereich hinein verlängert wird, um den Verriegelungsbolzen im entriegelten Zustand in der Distanzhülse aufnehmen zu können. Fertigungsbedingte Abstandstoleranzen zwischen Rahmen und Tor können durch eine variable axiale Position des Innenfutters gegenüber der Exzenterbuchse ausgeglichen werden. Eine Lastfreiheit des 2-Wege-Linearaktuators kann beispielsweise über einen aktiven Freilaufzustand gewährleistet werden, wie etwa ein gleichzeitiges Öffnen von Ein- und Auslassventil im Falle eines hydraulischen Aktuators. Die Axialkräfte können an der Distanzhülse abgegriffen und in die weitere Rumpfstruktur geleitet werden.

Gemäß einiger weiterer Ausführungsformen des erfindungsgemäßen Flugzeugtors kann das Flugzeugtor weiterhin eine rahmenseitige Tordichtung aufweisen, welche an einem Torrahmenspant montiert ist.

Gemäß einiger weiterer Ausführungsformen des erfindungsgemäßen Flugzeugtors können die Außenkegelmantelfläche der Rahmenklemmkegelhülse und die Innenkegelmantelfläche der Rahmenpresskegelhülse mit einer die Haftreibung zwischen der Rahmenklemmkegelhülse und der Rahmenpresskegelhülse vermindernden Beschichtung wie beispielsweise Teflon versehen sein. Insbesondere wenn die Reibung zwischen den Rahmenkegelhülsen geringer als die Reibung zwischen Verrieglungsbolzen und Rahmenklemmkegelhülse sowie zwischen Rahmenpresskegelhülse und Rahmeninnenfutter ist, kann eine Selbsthemmung des Verriegelungsbolzens in der rahmenseitigen Bolzenaufnahme in geklemmtem Zustand erzielt werden.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische Illustration eines Längsschnittes durch einen Bereich um einen Torspalt eines Flugzeugtors mit einer Torverriegelungsvorrichtung gemäß einer Ausführungsform der Erfindung; und
Fig. 2 eine schematische Illustration eines Flugzeugs mit einem mindestens eine Torverriegelungsvorrichtung aufweisenden Flugzeugtor gemäß einer Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

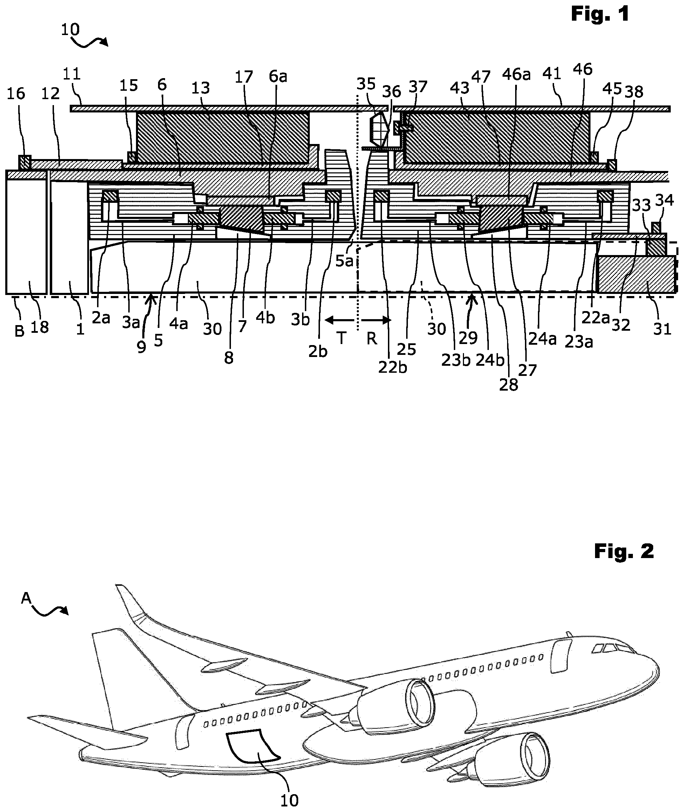

Fig. 1 zeigt eine schematische Illustration eines Längsschnittes durch einen Bereich um einen Torspalt eines Flugzeugtors mit einer Türverriegelungsvorrichtung 10. Das gezeigte Flugzeugtor kann dabei beispielweise eine Schwenkschiebetür oder eine Drehschwenktür sein, welche insbesondere als ein Frachtraumtor eines Flugzeugs ausgebildet werden kann, wie etwa des Flugzeugs Ader Fig. 2.

Gezeigt werden in Fig. 1 der ohne Beschränkung der Allgemeinheit links im Bild liegende Torabschnitt T sowie der rechts im Bild liegende Rahmenabschnitt R. Wenn das Tor geschlossen ist, liegt ein Torblatthautelement 11 nahe einem Rahmenhautelement 41. Der dadurch entstehende Außenspalt kann durch eine Tordichtung 35, wie beispielsweise eine Schaumstoff- oder Gummilippe möglichst fluiddicht abgeschlossen werden. Die Tordichtung 35 kann über einen Montagewinkel 36 und eine Schraubverbindung 37 mit einem C-Spant im Torrahmenbereich R fest verbunden werden.

Mit einem Torspant 13 des Tores, beispielsweise einen C-Spant, kann eine Exzenterbuchse 17 verbunden werden. In der Exzenterbuchse 17 ist ein Innenfutterteil 6 eingebracht, welches in der Verlängerung dessen Rotationsachse mit einem Kraftableitungsrohr 1 verbunden werden kann. Ein zweites Innenfutterteil 5 weist in seinem Inneren eine aktiv aktuierbare Klemmvorrichtung auf. Die Klemmvorrichtung umfasst eine radial gesehen außen liegende Presskegelhülse 7 mit konischer Innenaussparung sowie eine radial gesehen innen liegende Klemmkegelhülse 8 mit konischer Außenmantelfläche und zylindrischer Innenaussparung.

Das zweite Innenfutterteil 5 bildet eine mittig entlang einer Bolzenaufnahmeachse B ausgerichtete Bolzenaufnahme 9 zur Aufnahme eines Verriegelungsbolzens 30 aus. Der Verriegelungsbolzen 30 wird von dem Rahmenabschnitt R aus (entriegelter Zustand in gestrichelten Linien gezeigt) über einen 2-Wege-Linearaktuator 31 entlang der Bolzenaufnahmeachse B in den Torabschnitt T geschoben und in die Bolzenaufnahme 9 hineingeführt. Dazu kann der Verriegelungsbolzen 30 endseitig angefast werden - ebenso wie das zweite Innenfutterteil 5, welches am spaltseitigen Ende und auf Höhe der Öffnung der Bolzenaufnahmeachse B eine Bolzenführungsfase 5a aufweisen kann. Durch die Fasen des Verriegelungsbolzens 30 und/oder des zweiten Innenfutterteils 5 kann sich der Verriegelungsbolzen beim Verriegelungsvorgang vorteilhafterweise selbst zentrieren. Zudem kann das zweite Innenfutterteil 5 rahmenseitig ballig ausgeführt werden, um das Tor beim Schließen im Rahmen automatisch zentrieren zu können.

Die Presskegelhülse 7 kann über eine Passfeder 6a im ersten Innenfutterteil 6 gegen Rotation gesichert werden. Dies stellt einen passgenauen Sitz der koaxial zum Innenfutter angeordneten Presskegelhülse 7 in Radial- und Umfangsrichtung des ersten Innenfutterteils 6 sicher, ohne die Beweglichkeit entlang der Bolzenaufnahmeachse B zu beeinträchtigen. Die Klemmkegelhülse 8 fluchtet mit ihrer Innenzylindermantelfläche mit der Außenwand der Bolzenaufnahme 9, so dass die Innenzylindermantelfläche bei eingeführtem Verriegelungsbolzen 30 plan an dessen Außenumfangsfläche anliegt. Dadurch, dass die Konizität der beiden Kegelhülsen 7 und 8 gleich ist, steht die Außenkegelmantelfläche der Klemmkegelhülse 8 mit der Innenkegelmantelfläche der Presskegelhülse 7 in verschiebbarem Eingriff. Daher kann eine Verschiebung der Presskegelhülse 7 entlang der Bolzenaufnahmeachse B erfolgen, um je nach Stellung von Presskegelhülse 7 die entlang der Bolzenaufnahmeachse B fix im Innenfutterteil 5 eingespannte Klemmkegelhülse 8 fester oder weniger fest auf die Außenumfangsfläche des Verriegelungsbolzens 30 zu pressen.

Zur Aktuierung sind auf jeweils zwei entgegengesetzten Seiten der Presskegelhülse 7 in dem Innenfutterteil 5 zwei Linearaktuatoren 4a, 4b montiert, beispielsweise - wie dargestellt - Hydraulikzylinder 4a, 4b, die jeweils über Hydraulikflüssigkeitszuleitungen 3a, 3b mit Hydraulikeinlässen 2a, 2b fluidisch verbunden sind. Die Hydraulikeinlässe 2a, 2b können beispielsweise mit Hydrauliköldruck beaufschlagt werden, um eine wechselseitige Verschiebung der Presskegelhülse 7 - je nach aktuiertem Hydraulikzylinder 4a, 4b - zu bewirken. Eine Aktuierung des Hydraulikzylinders 4b bewirkt eine Erhöhung der Klemmwirkung auf den Verriegelungsbolzen 30, eine Aktuierung des Hydraulikzylinders 4a hingegen bewirkt eine Senkung der Klemmwirkung auf den Verriegelungsbolzen 30.

Die Presskegelhülse 7 und die Klemmkegelhülse 8 können jeweils geschlitzt sein, so dass sich die Schlitze sich um 180° versetzt gegenüber liegen. Dabei können ein oder mehrere Schlitze in die Kegelhülsen 7 bzw. 8 eingebracht werden, so dass die Kegelhülsen 7 bzw. 8 segmentiert werden. Beispielsweise können die Hülsensegmente aus einer einzigen Hülse hergestellt werden, und die Schlitze können entlang der Hülsenachse nur teilweise, d.h. nicht über die gesamte Länge des Hülsengrundkörpers eingebracht werden, zum Beispiel mittels eines Scheibenfräsers. Einer der Vorteile mehrfach geschlitzter und dadurch segmentierter Kegelhülsen besteht in der freien radialen Beweglichkeit.

Durch die ein oder mehreren Schlitzungen kann sichergestellt werden, dass der Anpressdruck auf den Verriegelungsbolzen 30 möglichst gleichmäßig um den Umfang des Verriegelungsbolzens 30 verteilt ausgeübt wird. Weiterhin kann die Klemmkegelhülse 8 in dem zweiten Innenfutterteil 5 gegenüber Rotation um die Bolzenaufnahmeachse B gesichert sein. Dies kann beispielsweise durch Verzahnung eines Schlitzes der Klemmkegelhülse 8 mit einer korrespondierenden Nase an dem zweiten Innenfutterteil 5 erfolgen. Alternativ dazu kann die Klemmkegelhülse 8 auch eine Hülsennase aufweisen, die dann in eine dazu korrespondierende Nut in dem zweiten Innenfutterteil 5 eingeführt wird. Wenn die Presskegelhülse 7 rotatorisch gegenüber dem ersten Innenfutterteil 6 über eine Passfeder 6a festgelegt wird, wird auch die Klemmkegelhülse 8 gegenüber dem ersten Innenfutterteil 6 festgelegt. Über die rotatorisch fixierte Positionierung der zwei Innenfutterteile 5 und 6 in Relation zueinander ergibt sich damit automatisch eine rotatorische Festlegung der zwei Kegelhülsen untereinander.

Wie in Fig. 1 beispielhaft dargestellt, verjüngt sich die Klemmkegelhülse 8 entlang der Bolzenaufnahmeachse B zur Öffnung der Bolzenaufnahme 9 hin, das heißt, dass durch die Klemmwirkung eine Selbsthemmung des Verriegelungsbolzens 30 erreicht werden kann, wenn die Außenkegelmantelfläche der Klemmkegelhülse 8 und die Innenkegelmantelfläche der Presskegelhülse 7 mit einer die Haftreibung zwischen der Klemmkegelhülse 8 und der Presskegelhülse 7 vermindernden Beschichtung versehen sind. Eine solche Beschichtung kann beispielsweise Teflon sein. Im Gegenzug dazu kann die Innenzylindermantelfläche der Klemmkegelhülse 8 unbeschichtet oder sogar die Haftreibung begünstigend beschichtet werden.

Zur Montage der Torverriegelungsvorrichtung 10 kann die Exzenterbuchse 17 samt Innenfutter 5, 6 zunächst in das Tor eingefügt werden und solange gedreht werden, bis Fertigungstoleranzen ausgeglichen sind. Dazu kann beispielsweise temporär ein Hilfsbolzen zur Ausrichtung in die Bolzenaufnahme 9 eingeführt werden. Danach kann die Exzenterbuchse 17 beispielsweise über eine Mutter 15 gesichert werden. Der Abstand zum Torspalt kann über eine Rohrhülse 12 mit entsprechender Muttersicherung 16 an einem torseitig montierten Verbindungsrohr 18 im Inneren des Tores variabel eingestellt werden. Dazu liegt die Rohrhülse 12 am hinteren, d.h. torinnenseitigen Ende der Exzenterbuchse 17 an. Zwischen dem Innenfutterteil 5 und dem toraußenseitigen Ende der Exzenterbuchse 17 kann dann ein Spalt an den gewünschten Abstand zum Torspalt eingestellt werden. Dadurch kann ein Toleranzausgleich in Achsenrichtung erfolgen.

Über das Kraftableitungsrohr 1, welches mittels der Rohrhülse 12 mit dem Verbindungsrohr 18 verschraubt ist, kann eine Übertragung von Zug- und Druckkräften des Rahmens ohne Beanspruchung des Tores erfolgen.

Rahmenseitig kann ebenfalls eine komplementäre Vorrichtung montiert werden. Dazu wird in dem Torrahmenbereich Rein 2-Wege-Linearaktuator 31 über eine Verbindung 33 mit einer Distanzhülse 32 per Mutter 34 gesichert, Diese verlängerte Distanzhülse 32 dient einer entsprechenden Verlängerung in den Torrahmenbereich R hinein, um den Verriegelungsbolzen 30 im entriegelten Zustand in der Distanzhülse 32 aufnehmen zu können. Der 2-Wege-Linearaktuator 31 kann beispielsweise ein Hydraulikzylinder sein und dient dazu, den Verriegelungsbolzen 30 von einer Rahmenbolzenaufnahme 29 entlang der Bolzenaufnahmeachse B in die torseitige Torverrieglungsvorrichtung 10 zu führen. Axialkräfte werden größtenteils kraftschlüssig über die Kegelhülsen 27 und 28 in den Spant 43 abgeleitet. Über die Distanzhülse 32 können Axialkräfte in geringerem Umfang in die Umgebungsstruktur des Spantes 43 im Torrahmenbereich R abgeleitet und verteilt werden.

Im Torrahmenbereich R wird - ähnlich zum Torabschnitt T - eine Rahmenexzenterbuchse 47 mit einem Torrahmenspant 43 verbunden und über eine Mutter 45 gesichert. In der Rahmenexzenterbuchse 47 ist ein eingebrachtes Rahmeninnenfutter aus ein- oder mehrteiligen Futterkomponenten 25 und 46 verbaut, in welchem eine Innenkegelmantelfläche einer Rahmenpresskegelhülse 27 mit einer Außenkegelmantelfläche einer Rahmenklemmkegelhülse 28 in verschiebbarem Eingriff steht. Das Rahmeninnenfutter kann nach der Ausrichtung zum Ausgleich axialer fertigungsbedingter Toleranzen über eine Schraubverbindung in der Rahmenexzenterbuchse 47 gesichert werden.

In der inneren Futterkomponente 25 sind Rahmenlinearaktuatoren 24a, 24b, wie beispielsweise Hydraulikzylinder mit Zufuhrleitungen 23a, 23b und entsprechenden Fluideinlässen 22a, 22b, verbaut. Diese Rahmenlinearaktuatoren 24a, 24b liegen auf jeweils zwei entgegengesetzten Seiten der Rahmenpresskegelhülse 27 und sind dazu ausgelegt, die Rahmenpresskegelhülse 27 entlang der Bolzenaufnahmeachse B gegenüber der Rahmenklemmkegelhülse 28 zum Einklemmen bzw. Freigeben des Verriegelungsbolzens 30 zu verschieben.

Wiederum kann die Rahmenpresskegelhülse 27 über eine Passfeder 46a im Innenfutterteil 46 gegen Rotation gesichert werden. Dies stellt einen passgenauen Sitz der Rahmenpresskegelhülse 27 in Radial- und Umfangsrichtung der Rahmenbolzenaufnahme 29 sicher, ohne die Beweglichkeit entlang der Bolzenaufnahmeachse B zu beeinträchtigen. Die Rahmenklemmkegelhülse 28 fluchtet mit ihrer Innenzylindermantelfläche mit der Außenwand der Rahmenbolzenaufnahme 29, so dass die Innenzylindermantelfläche an der Außenumfangsfläche des Verriegelungsbolzens 30 plan anliegt. Dadurch, dass die Konizität der beiden Kegelhülsen 27 und 28 gleich ist, steht die Außenkegelmantelfläche der Rahmenklemmkegelhülse 28 mit der Innenkegelmantelfläche der Rahmenpresskegelhülse 27 in verschiebbarem Eingriff. Daher kann eine Verschiebung der Rahmenpresskegelhülse 27 entlang der Bolzenaufnahmeachse B erfolgen, um je nach Stellung von Rahmenpresskegelhülse 27 die entlang der Bolzenaufnahmeachse B fix in der Futterkomponente 25 eingespannte Rahmenklemmkegelhülse 28 fester oder weniger fest auf die Außenumfangsfläche des Verriegelungsbolzens 30 zu pressen.

Eine Aktuierung des Hydraulikzylinders 24b bewirkt eine Erhöhung der Klemmwirkung auf den Verriegelungsbolzen 30, eine Aktuierung des Hydraulikzylinders 24a hingegen bewirkt eine Senkung der Klemmwirkung auf den Verriegelungsbolzen 30.

Die Rahmenpresskegelhülse 27 und die Rahmenklemmkegelhülse 28 können jeweils geschlitzt sein, so dass sich die Schlitze um 180° versetzt gegenüber liegen. Dadurch kann sichergestellt werden, dass der Anpressdruck auf den Verriegelungsbolzen 30 möglichst gleichmäßig um den Umfang des Verriegelungsbolzens 30 verteilt ausgeübt wird. Weiterhin kann die Rahmenklemmkegelhülse 28 in dem Rahmeninnenfutter gegenüber Rotation um die Bolzenaufnahmeachse B gesichert sein. Dies kann beispielsweise durch Verzahnung eines Schlitzes der Rahmenklemmkegelhülse 28 mit einer korrespondierenden Nase an dem Rahmeninnenfutter erfolgen. Alternativ dazu kann die Rahmenklemmkegelhülse 28 auch eine Hülsennase aufweisen, die dann in eine dazu korrespondierende Nut in dem Rahmeninnenfutter eingeführt wird. Wenn die Rahmenpresskegelhülse 27 rotatorisch gegenüber dem Rahmeninnenfutter über eine Passfeder 26a festgelegt wird, wird auch die Rahmenklemmkegelhülse 28 gegenüber dem Rahmeninnenfutter festgelegt. Über eine Verzahnung mit der Rahmenpresskegelhülse 27 ergibt sich damit automatisch eine rotatorische Festlegung der zwei Kegelhülsen untereinander.

Wie in Fig. 1 beispielhaft dargestellt, verjüngt sich die Rahmenklemmkegelhülse 8 entlang der Bolzenaufnahmeachse B zur Öffnung der Rahmenbolzenaufnahme 29 hin, das heißt, dass durch die Klemmwirkung eine Selbsthemmung des Verriegelungsbolzens 30 erreicht werden kann, wenn die Außenkegelmantelfläche der Rahmenklemmkegelhülse 28 und die Innenkegelmantelfläche der Rahmenpresskegelhülse 27 mit einer die Haftreibung zwischen der Rahmenklemmkegelhülse 28 und der Rahmenpresskegelhülse 27 vermindernden Beschichtung versehen sind. Eine solche Beschichtung kann beispielsweise Teflon sein. Im Gegenzug dazu kann die Innenzylindermantelfläche der Rahmenklemmkegelhülse 28 unbeschichtet oder sogar die Haftreibung begünstigend beschichtet werden.

Die Linearaktuatoren 4a, 4b, 24a und 24b können grundsätzlich jeden bekannten Typ, jede Konfiguration und jeden Mechanismus zur Erzeugung einer linearen Antriebsbetätigung oder Hubbewegung umfassen. Die Linearaktuatoren können beispielsweise pneumatisch oder hydraulisch angetriebene Kolben-ZylinderAnordnungen oder einen elektrischen Linearmotor oder einen elektrischen, hydraulischen oder pneumatischen Rotationsmotor umfassen, der eine Trapezgewindespindel und einen Gewindenachläufer oder eine Zahnstange und ein Ritzel antreibt, zum Beispiel. Vorzugsweise werden diese Kolben-ZylinderAnordnungen hydraulisch angetrieben, alternativ können sie aber auch pneumatisch angetrieben sein.

Die beschriebenen Torverriegelungsvorrichtungen können in allen Bereichen der Transportindustrie, beispielsweise für Straßenkraftfahrzeuge, für Schienenfahrzeuge, für Luftfahrzeuge oder für Wasserfahrzeuge, aber auch für portable Container generell eingesetzt werden. Insbesondere können die beschriebenen Torverriegelungsvorrichtungen für Türen oder Tore mit hohen Zugbelastungen im Betrieb, wie etwa für Frachtraumtore von Flugzeugen, eingesetzt werden.

## Patentansprüche

1. Torverriegelungsvorrichtung (10) für ein Flugzeugtor, umfassend:
eine Exzenterbuchse (17), welche mit einem Torspant (13) des Flugzeugtorblatts verbindbar ist;
ein in der Exzenterbuchse (17) eingebrachtes Innenfutter (5, 6), welches eine mittig entlang einer Bolzenaufnahmeachse (B) ausgerichtete Bolzenaufnahme (9) zur Aufnahme eines Verriegelungsbolzens (30) aufweist;
eine in dem Innenfutter (5, 6) angeordnete Presskegelhülse (7);
eine Klemmkegelhülse (8), deren Außenkegelmantelfläche mit einer Innenkegelmantelfläche der Presskegelhülse (7) in verschiebbarem Eingriff steht, und deren Innenzylindermantelfläche mit der Außenwand der Bolzenaufnahme (9) fluchtet; und
auf jeweils zwei entgegengesetzten Seiten der Presskegelhülse (7) in dem Innenfutter (5, 6) montierte Linearaktuatoren (4a, 4b), welche dazu ausgelegt sind, die Presskegelhülse (7) entlang der Bolzenaufnahmeachse (B) gegenüber der Klemmkegelhülse (28) zu verschieben.

2. Torverriegelungsvorrichtung (10) gemäß Anspruch 1, wobei die Presskegelhülse (7) und/oder die Klemmkegelhülse (8) einfach oder mehrfach jeweils teilweise oder über die gesamte Länge des Kegelhülsenkörpers geschlitzt sind.

3. Torverriegelungsvorrichtung (10) gemäß Anspruch 2, wobei die Klemmkegelhülse (8) entweder durch Verzahnung ihres Schlitzes oder einer Nut eines Segmentes über eine Nase des Innenfutters (5, 6) oder durch eine Hülsennase der Klemmkegelhülse (8) oder eine Nase an einem ihrer Segmente in einer korrespondierenden Nut im Innenfutter (5, 6) gegenüber Rotation um die Bolzenaufnahmeachse (B) gesichert wird und wobei die Presskegelhülse (7) über eine Passfeder (6a) gegenüber Rotation um die Bolzenaufnahmeachse (B) in dem Innenfutter festgelegt wird.

4. Torverriegelungsvorrichtung (10) gemäß einem der Ansprüche 1 bis 3, wobei die Linearaktuatoren (4a, 4b) Hydraulikzylinder sind.

5. Torverriegelungsvorrichtung (10) gemäß einem der Ansprüche 1 bis 4, weiterhin umfassend:
ein Kraftableitungsrohr (1), welches über eine Rohrhülse (12) mit einem torseitig montierten Verbindungsrohr (18) verschraubt ist.

6. Torverriegelungsvorrichtung (10) gemäß einem der Ansprüche 1 bis 5, wobei sich die Klemmkegelhülse (8) entlang der Bolzenaufnahmeachse (B) zur Öffnung der Bolzenaufnahme (9) hin verjüngt.

7. Torverriegelungsvorrichtung (10) gemäß Anspruch 6, wobei die Außenkegelmantelfläche der Klemmkegelhülse (8) und die Innenkegelmantelfläche der Presskegelhülse (7) mit einer die Haftreibung zwischen der Klemmkegelhülse (8) und der Presskegelhülse (7) vermindernden Beschichtung, insbesondere Teflon, versehen sind.

8. Torverriegelungsvorrichtung (10) gemäß einem der Ansprüche 1 bis 7, wobei das Innenfutter (6) rahmenseitig ballig ausgeführt ist und/oder an der Öffnung der Bolzenaufnahme (9) eine Bolzenführungsfase (5a) aufweist.

9. Flugzeugtor, umfassend:
ein Torblatt mit Torspanten (13) und Torhautelementen (11);
eine in dem Torblatt montierte Torverriegelungsvorrichtung (10) gemäß einem der Ansprüche 1 bis 8;
einen Torrahmenbereich (R) mit einem über einen 2-Wege-Linearaktuator (31) angetriebenen Verriegelungsbolzen (30), welcher entlang der Bolzenaufnahmeachse (B) in einer Rahmenbolzenaufnahme (29) geführt wird;
eine Rahmenexzenterbuchse (47), welche mit einem Torrahmenspant (43) verbunden ist; und
ein in der Rahmenexzenterbuchse (47) eingebrachtes Rahmeninnenfutter (46), in welchem eine Innenkegelmantelfläche einer Rahmenpresskegelhülse (27) mit einer Außenkegelmantelfläche einer Rahmenklemmkegelhülse (28) in verschiebbarem Eingriff steht, und in welchem auf jeweils zwei entgegengesetzten Seiten der Rahmenpresskegelhülse (27) angebrachte Rahmenlinearaktuatoren (24a, 24b) dazu ausgelegt sind, die Rahmenpresskegelhülse (27) entlang der Bolzenaufnahmeachse (B) gegenüber der Rahmenklemmkegelhülse (28) zum Einklemmen bzw. Freigeben des Verriegelungsbolzens (30) zu verschieben.

10. Flugzeugtor gemäß Anspruch 9, wobei der 2-Wege-Linearaktuator (31) ein Hydraulikzylinder ist, welcher über eine Distanzhülse (32) in Richtung der Bolzenaufnahmeachse (B) in den Rahmenbereich hinein verlängert wird, um den Verriegelungsbolzen (30) im entriegelten Zustand in der Distanzhülse (32) aufnehmen zu können.

11. Flugzeugtor gemäß einem der Ansprüche 9 und 10, weiterhin mit einer rahmenseitigen Tordichtung (35), welche an einem Torrahmenspant (43) montiert ist.

12. Flugzeugtor gemäß einem der Ansprüche 9 bis 11, wobei die Außenkegelmantelfläche der Rahmenklemmkegelhülse (28) und die Innenkegelmantelfläche der Rahmenpresskegelhülse (27) mit einer die Haftreibung zwischen der Rahmenklemmkegelhülse (28) und der Rahmenpresskegelhülse (27) vermindernden Beschichtung, insbesondere Teflon, versehen sind.

13. Flugzeugtor gemäß einem der Ansprüche 9 bis 12, wobei der Verriegelungsbolzen (30) endseitig angefast ist.

14. Flugzeug (A) mit einem Flugzeugtor gemäß einem der Ansprüche 9 bis 13.

15. Flugzeug gemäß Anspruch 14, wobei das Flugzeugtor als Frachtraumtor ausgebildet ist.

## Claims

1. Hatch locking device (10) for an aircraft hatch, comprising:
an eccentric bush (17) which can be connected to a hatch bulkhead (13) of the aircraft hatch panel;
an inner lining (5, 6) which is introduced into the eccentric bush (17) and has a bolt receptacle (9) which is oriented centrally along a bolt receptacle axis (B) for receiving a locking bolt (30);
a conical pressing sleeve (7) which is arranged in the inner lining (5, 6);
a conical clamping sleeve (8), the outer conical shell face of which is in displaceable engagement with an inner conical shell face of the conical pressing sleeve (7), and the inner cylindrical shell face of which is flush with the outer wall of the bolt receptacle (9); and
linear actuators (4a, 4b) which are mounted on in each case two opposite sides of the conical pressing sleeve (7) in the inner lining (5, 6) and are designed to displace the conical pressing sleeve (7) along the bolt receptacle axis (B) with respect to the conical clamping sleeve (28).

2. Hatch locking device (10) according to Claim 1, the conical pressing sleeve (7) and/or the conical clamping sleeve (8) being slotted one time or multiple times in each case partially or over the entire length of the conical sleeve body.

3. Hatch locking device (10) according to Claim 2, the conical clamping sleeve (8) being secured against rotation about the bolt receptacle axis (B) either by way of interlocking of its slot or a groove of a segment via a lug of the inner lining (5, 6) or by way of a sleeve lug of the conical clamping sleeve (8) or a lug on one of its segments in a corresponding groove in the inner lining (5, 6), and the conical pressing sleeve (7) being fixed with respect to rotation about the bolt receptacle axis (B) in the inner lining via a feather key (6a).

4. Hatch locking device (10) according to one of Claims 1 to 3, the linear actuators (4a, 4b) being hydraulic cylinders.

5. Hatch locking device (10) according to one of Claims 1 to 4, comprising, furthermore:
a force dissipation tube (1) which is screwed via a tube sleeve (12) to a connecting tube (18) which is mounted on the hatch side.

6. Hatch locking device (10) according to one of Claims 1 to 5, the conical clamping sleeve (8) tapering along the bolt receptacle axis (B) towards the opening of the bolt receptacle (9).

7. Hatch locking device (10) according to Claim 6, the outer conical shell face of the conical clamping sleeve (8) and the inner conical shell face of the conical pressing sleeve (7) being provided with a coating, in particular Teflon, which decreases the static friction between the conical clamping sleeve (8) and the conical pressing sleeve (7).

8. Hatch locking device (10) according to one of Claims 1 to 7, the inner lining (6) being of crowned configuration on the frame side and/or having a bolt guiding chamfer (5a) at the opening of the bolt receptacle (9).

9. Aircraft hatch, comprising:
a hatch panel with hatch bulkheads (13) and hatch skin elements (11);
a hatch locking device (10) according to one of Claims 1 to 8 which is mounted in the hatch panel;
a hatch frame region (R) with a locking bolt (30) which is driven via a two-way linear actuator (31) and is guided along the bolt receptacle axis (B) in a frame bolt receptacle (29);
a frame eccentric bush (47) which is connected to a hatch frame bulkhead (43); and
a frame inner lining (46) which is introduced into the frame eccentric bush (47) and in which an inner conical shell face of a frame conical pressing sleeve (27) is in displaceable engagement with an outer conical shell face of a frame conical clamping sleeve (28), and in which frame linear actuators (24a, 24b) which are attached on in each case two opposite sides of the frame conical pressing sleeve (27) are designed to displace the frame conical pressing sleeve (27) along the bolt receptacle axis (B) with respect to the frame conical clamping sleeve (28) in order to clamp in or release the locking bolt (30).

10. Aircraft hatch according to Claim 9, the two-way linear actuator (31) being a hydraulic cylinder which is extended via a spacer sleeve (32) into the frame region in the direction of the bolt receptacle axis (B), in order to be able to receive the locking bolt (30) in the spacer sleeve (32) in the unlocked state.

11. Aircraft hatch according to either of Claims 9 and 10, with, furthermore, a frame-side hatch seal (35) which is mounted on a hatch frame bulkhead (43).

12. Aircraft hatch according to one of Claims 9 to 11, the outer conical shell face of the frame conical clamping sleeve (28) and the inner conical shell face of the frame conical pressing sleeve (27) being provided with a coating, in particular Teflon, which decreases the static friction between the frame conical clamping sleeve (28) and the frame conical pressing sleeve (27).

13. Aircraft hatch according to one of Claims 9 to 12, the locking bolt (30) being chamfered on the end side.

14. Aircraft (A) with an aircraft hatch according to one of Claims 9 to 13.

15. Aircraft according to Claim 14, the aircraft hatch being configured as a cargo hold hatch.

## Revendications

1. Dispositif de verrouillage de porte (10) pour une porte d'aéronef, comprenant :
une douille excentrique (17), laquelle peut être reliée à une membrure de porte (13) du vantail de porte d'aéronef;
un revêtement intérieur (5, 6) introduit dans la douille excentrique (17), lequel présente un logement de boulon (9), orienté centralement le long d'un axe de logement de boulon (B), servant au logement d'un boulon de verrouillage (30) ;
une douille conique de pressage (7) disposée dans le revêtement intérieur (5, 6) ;
une douille conique de serrage (8), dont la surface d'enveloppe conique extérieure est en prise de manière déplaçable avec une surface d'enveloppe conique intérieure de la douille conique de pressage (7), et dont la surface d'enveloppe cylindrique intérieure est en affleurement avec la paroi extérieure du logement de boulon (9) ; et
des actionneurs linéaires (4a, 4b) montés sur respectivement deux côtés opposés de la douille conique de pressage (7) dans le revêtement intérieur (5, 6), lesquels actionneurs linéaires sont conçus pour déplacer la douille conique de pressage (7) le long de l'axe de logement de boulon (B) par rapport à la douille conique de serrage (28).

2. Dispositif de verrouillage de porte (10) selon la revendication 1, dans lequel la douille conique de pressage (7) et/ou la douille conique de serrage (8) est/sont fendue(s) une fois ou plusieurs fois respectivement partiellement ou sur toute la longueur du corps de douille conique.

3. Dispositif de verrouillage de porte (10) selon la revendication 2, dans lequel la douille conique de serrage (8) est fixée de manière à empêcher une rotation autour de l'axe de logement de boulon (B) soit par engrènement de sa fente ou d'une rainure d'un segment par le biais d'un ergot du revêtement intérieur (5, 6) ou au moyen d'un ergot de douille de la douille conique de serrage (8) ou d'un ergot sur l'un de ses segments dans une rainure correspondante dans le revêtement intérieur (5, 6) et dans lequel la douille conique de pressage (7) est fixée de manière à empêcher une rotation autour de l'axe de logement de boulon (B) dans le revêtement intérieur par le biais d'une clavette parallèle (6a).

4. Dispositif de verrouillage de porte (10) selon l'une des revendications 1 à 3, dans lequel les actionneurs linéaires (4a, 4b) sont des cylindres hydrauliques.

5. Dispositif de verrouillage de porte (10) selon l'une des revendications 1 à 4, comprenant en outre :
un tube de dissipation de force (1), lequel est vissé par le biais d'une douille de tube (12) sur un tube de liaison (18) monté côté porte.

6. Dispositif de verrouillage de porte (10) selon l'une des revendications 1 à 5, dans lequel la douille conique de serrage (8) se rétrécit le long de l'axe de logement de boulon (B) vers l'ouverture du logement de boulon (9).

7. Dispositif de verrouillage de porte (10) selon la revendication 6, dans lequel la surface d'enveloppe conique extérieure de la douille conique de serrage (8) et la surface d'enveloppe conique intérieure de la douille conique de pressage (7) sont pourvues d'un revêtement, en particulier du Téflon, réduisant le frottement statique entre la douille conique de serrage (8) et la douille conique de pressage (7).

8. Dispositif de verrouillage de porte (10) selon l'une des revendications 1 à 7, dans lequel le revêtement intérieur (6) est réalisé de manière bombée côté cadre et/ou présente, au niveau de l'ouverture du logement de boulon (9), un biseau de guidage de boulon (5a).

9. Porte d'aéronef, comprenant :
un vantail de porte doté de membrures de porte (13) et d'éléments de panneau de porte (11) ;
un dispositif de verrouillage de porte (10), monté dans le vantail de porte, selon l'une des revendications 1 à 8 ;
une région de cadre de porte (R) dotée d'un boulon de verrouillage (30) entraîné par le biais d'un actionneur linéaire à 2 voies (31), lequel boulon de verrouillage est guidé le long de l'axe de logement de boulon (B) dans un logement de boulon de cadre (29) ;
une douille excentrique de cadre (47), laquelle est reliée à une membrure de cadre de porte (43) ; et
un revêtement intérieur de cadre (46) introduit dans la douille excentrique de cadre (47), revêtement dans lequel une surface d'enveloppe conique intérieure d'une douille conique de pressage de cadre (27) est en prise de manière déplaçable avec une surface d'enveloppe conique extérieure d'une douille conique de serrage de cadre (28), et dans lequel des actionneurs linéaires de cadre (24a, 24b) fixés sur respectivement deux côtés opposés de la douille conique de pressage de cadre (27) sont conçus pour déplacer la douille conique de pressage de cadre (27) le long de l'axe de logement de boulon (B) par rapport à la douille conique de serrage de cadre (28) pour le serrage ou la libération du boulon de verrouillage (30).

10. Porte d'aéronef selon la revendication 9, dans laquelle l'actionneur linéaire à 2 voies (31) est un cylindre hydraulique, lequel est prolongé par le biais d'une douille d'espacement (32) dans la région de cadre dans la direction de l'axe de logement de boulon (B), afin de pouvoir loger le boulon de verrouillage (30) dans la douille d'espacement (32) dans l'état déverrouillé.

11. Porte d'aéronef selon l'une des revendications 9 et 10, en outre dotée d'un joint d'étanchéité de porte (35) côté cadre, lequel joint d'étanchéité est monté sur une membrure de cadre de porte (43).

12. Porte d'aéronef selon l'une des revendications 9 à 11, dans laquelle la surface d'enveloppe conique extérieure de la douille conique de serrage de cadre (28) et la surface d'enveloppe conique intérieure de la douille conique de pressage de cadre (27) sont pourvues d'un revêtement, en particulier du Téflon, réduisant le frottement statique entre la douille conique de serrage de cadre (28) et la douille conique de pressage de cadre (27) .

13. Porte d'aéronef selon l'une des revendications 9 à 12, dans laquelle le boulon de verrouillage (30) est chanfreiné à une extrémité.

14. Aéronef (A) doté d'une porte d'aéronef selon l'une des revendications 9 à 13.

15. Aéronef selon la revendication 14, dans lequel la porte d'aéronef est réalisée sous forme de porte de soute.
